# EUROPEAN PATENT SPECIFICATION

(11) **EP 1 569 392 B1**
(45) Date of publication and mention of the grant of the patent: **21.01.2009**
(21) Application number: 04251089.1
(22) Date of filing: 26.02.2004
(51) Int. Cl.: H04L 12/56

(54) **Distributed wireless packet assembly**
Verteilte drahtlose Paketanordnung
Ensemble partagé de paquets sans fil

(43) Date of publication of application: 31.08.2005
(73) Proprietor: Research In Motion Limited, Waterloo, Ontario N2L 3W8 (CA)
(72) Inventor: Hassan, Ahmed, Waterloo, Ontario N2J 4T3 (CA); Zou, Bo, Waterloo, Ontario N2T 2X5 (CA); Patterson, Ian, Petersburg, Ontario N0B 2H0 (CA)
(74) Representative: Rickard, David John

(56) References cited:
- EP-A- 1 383 292

## Description

The present invention relates to packet assembly in wireless communications networks.

Packet based wireless communications networks often include a gateway that acts as an interface between the wireless network and a wired network. Mobile devices that communicate with the wireless network break the data that they are transmitting up into multiple packets, which are sent to network points associated with the gateway, and then the multiple packets are subsequently reassembled. In present systems, a mobile device will typically communicate through a single network point within a coverage area for sending the message. Thus, to send a message, the mobile device breaks the message into multiple packets and sends all the packets to the single network point. In some circumstances, redundancy and scalability requirements may not be adequately be met by using a single network point for an entire message. Additionally, inefficiencies can arise in the event that the mobile device roams from one network point to another, as the message may have to be resent by the mobile device in its entirety to the new network point.

[0002a] EP1383292 discloses a data packet ordering method in a mobile communication network employing hierarchical routing with data packet forwarding comprising the step of providing at least one data message encompassing a predefined sequence of data packets, forwarding at least one of said data packets of the sequence via a first network element over a first transmission path to a user equipment, whereby a part of the data packets is temporarily buffered in the first network element during transmission, establishing a second transmission path, while forwarding the data packet sequence, such that the remaining data packets of the sequence not yet transmitted over the first path are forwarded via a second network element, forwarding of the data packets buffered in the first network element to the second network element for providing all data packets comprised by the data packet sequence to the user equipment, receiving and ordering of the data packets within said second network element according to the packet data priority given by the data packet sequence, forwarding the ordered data packets to the user equipment.

### GENERAL

[0002b] The invention is described by the appended independent claims. Further embodiments are described by the appended dependent claims.

Accordingly, a method and system for assembling data packets received from mobile devices that allows for improved redundancy, efficiency and scalability is desirable.

According to at least one example there is provided a method and system for distributed assembly of data packets into messages at a group of interface devices that receive data packets from mobile devices within a coverage area. Each interface device in the group will take ownership of a sequence of data packets forming a message when a data packet of the message meeting predetermined criteria is received by that interface device. Once an interface device takes ownership of a sequence of data packets, it sends a request to the other interface devices for any missing data packets of the sequence that the ownership claiming interface does not have, and then assembles message upon receiving all the data packets of the sequence.

According to another example of the invention there is provided a method for assembling a message from a sequence of data packets in a communications system having a group of interface devices for assembling messages transmitted as sequences of data packets from within a coverage area of a wireless communications network, the method comprising: receiving at one interface device of the group of interface devices from the wireless communications network at least one data packet of a sequence of data packets that collectively form a message; the method being characterised in that it further comprises: determining if the interface device should assemble the message based on a location of the at least one data packet in the sequence of data packets, and if so sending out a request to the other interface devices of the group for any data packets of the sequence received by the other interface devices and receiving at the one interface device any data packets sent by the other interface devices in response to the request; and assembling the data packets of the sequence into the message at the one interface device.

According to another example of the invention there is provided an interface device comprising one of a group of interface devices for receiving messages transmitted as sequences of data packets from within a coverage area of a wireless communications network, the group of interface devices being coupled to a gateway network for communicating there between, the interface device comprising a message assembler for assembling messages from received data packets, wherein the message assembler is characterised in that it comprises: means for determining if the interface device should assemble a message from a sequence of data packets of which the interface device has received at least one data packet; means responsive to said means for determining for sending out a request for any missing data packets to the other interface devices in the group over the gateway network; and means for assembling the message upon receiving the missing data packets.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Figure 1 is a block diagram showing a communications system including a computer network in which the present invention is implemented according to embodiments of the invention;

Figure 2 is a flow diagram showing a diagram reassembly process according to example embodiments of the invention;

Figure 3 is a block diagram representation of an example of a data packet; and

Figure 4 is a block diagram representation of an example of an ownership claim packet.

Similar references may be used in different figures to denote similar components or features.

### DESCRIPTION OF PREFERRED EMBODIMENTS

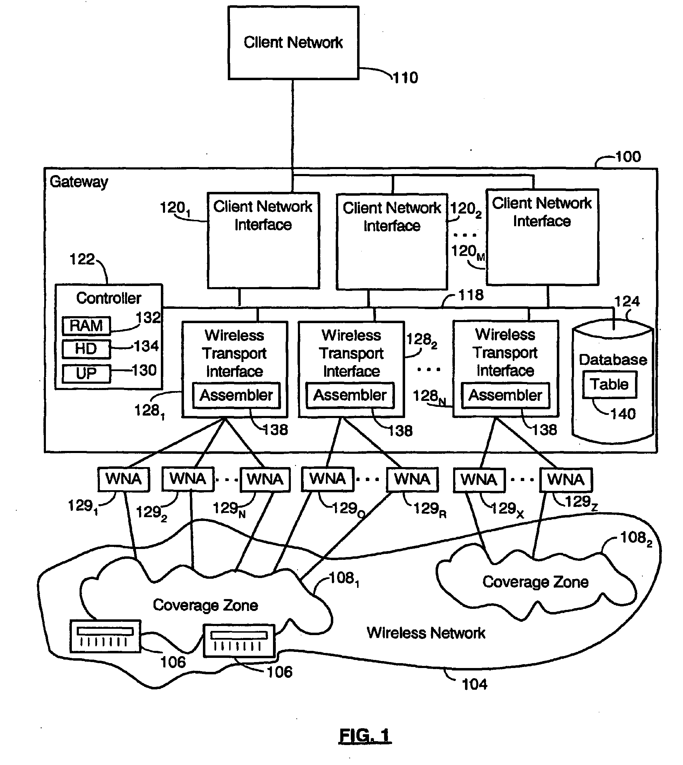

Referring to the drawings, Figure 1 is a block diagram of a communications system that includes a networked computer system in which the present invention may be implemented. The networked computer system shown is a router or wireless gateway 100 that functions as an intermediary and interpreter between one or more client networks 110 and one or more wireless networks 104, allowing email messages to be exchanged between mobile devices 106 within the wireless network 104 and devices connected to the client network 110. In some examples, the mobile devices 106 can access the Internet and World Wide Web through wireless network 104 and gateway 100.

The client network 110 will often be remotely located from the wireless gateway 100 and communicates over one or more communications links with the wireless gateway 100. Client network 110 will typically include a client side interface for handling email communications with the gateway 100. The email messages may, as well known in the art, include, among other things, plain text messages, HTML messages, and attached files of a wide variety of types. Client network 110 may also include an access point for the Internet and World Wide Web.

The wireless gateway 100 provides translation and routing services between one or more client networks 110 and wireless networks 104 to facilitate email communication between mobile devices 106 and devices connected, directly or indirectly, to client network 110. The wireless gateway 100 includes several distributed components including, among other things, client network interfaces 120₁-120_{M}, at least one controller 122, a database 124, and wireless transport interfaces 128₁-128_{N}. In order to provide increased capacity and backup redundancy when required, the gateway components are each preferably implemented using dedicated digital computers that are connected by a gateway network 118 (which may be a dedicated LAN). As known in the art, and as shown in respect of the Controller 122, the digital computer components each include, among other things, a microprocessor 130, a transient memory such as RAM 132, typically a persistent writable memory such as a flash memory and/or hard drive (HD) 134, and network communications interface cards. If one component, for example, wireless transport interface 128ₖ (where 1≤ k ≤N) crashes or otherwise becomes unavailable, another one or more of wireless transport interfaces 128 in the wireless gateway 100 that is associated with the same zone or area of wireless network 104 as the failed wireless transport interface 128 can pick up the traffic formerly handled by the failed wireless transport interface.

In the gateway 100 of Figure 1, the client network interfaces 120 are each configured to manage the connection between the wireless gateway 100 and at least one client network 110. In one example, the client network interfaces 120 maintain an open connection with one or more client side interfaces at the client network 110 and communicate therewith using a defined protocol.

The database 124 of the wireless gateway 100 stores data used by the other components of the wireless gateway 100 for administrative, tracking and message recovery purposes, and in this regard a number of the components of the wireless gateway 100 are configured to write to and read from the database 124. Among other things, the database stores configuration information for the wireless gateway components, keeps data as to the current status and state of the wireless gateway, stores information (including ID numbers and last known location) about the mobile devices 106 that communicate with the wireless gateway 100, and stores information about selected messages. The information stored by the database 124 assists with disaster/error recovery and can permit a backup component to take over the functions of a component that fails.

The wireless gateway 100 includes at least one controller in the form of controller 122 for controlling and coordinating operation of the gateway. Among other things the controller 122 monitors the operation of the components of gateway 100 by periodically polling the components for current state information, which the controller stores in the database 124. The controller 122 is configured to detect the failure or pending failure of components within the wireless gateway and coordinate other components to take over the functions of failed components.

The wireless transport interfaces 128 are the wireless gateway's interface to the mobile devices 106, and assemble messages that are destined for mobile devices into sequences of packets, the format of which is dependent on the specific wireless network 104. Similarly, as will be described in greater detail below, the wireless transport interfaces 128 recombine messages from mobile devices from sequences of packets sent from the mobile devices.

In one implementation, a group of wireless transport interfaces 128 will typically each communicate with mobile devices 106 located within a coverage zone or geographic area 108 within wireless network 104 through a plurality of associated wireless network adaptors 129. As shown in the example of Figure 1, a first group that includes wireless transport interfaces 128₁ and 128₂ communicate through associated wireless network adaptors 129₁-129_{N} and 129₀-129_{R}, respectively, with a first coverage area 108₁. A further group that includes wireless transport interface 128_{N} and other wireless transport interfaces (not shown in Figure 1) communicates with a further coverage zone 108₂.

In one implementation, wireless network adaptors have a TCP/IP connection to wireless transport interfaces 128 and an X.25 protocol connection to wireless network 104 such that the wireless network interface adaptors route packets from the wireless transport interfaces 128 over a TCP/IP connection to an X.25 mobile network connection and vice versa. The configuration of and requirement for wireless network adaptors 129 depend on the type of wireless network 104.

Wireless network 104 is in one implementation, a wireless packet data network, (e.g. Mobitex^{™} or DataTAC^{™}), which provides radio coverage to mobile devices 106. Among other things, wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems). The coverage area 108 associated with a group of wireless transport interfaces 128 may cover a continuous geographic region, or may cover a series of discrete geographic regions. In some implementations, the coverage area 108 may include a plurality of sub-areas, each of which are served by one or a sub-set of the group of wireless transport interfaces 128, such that roaming among the wireless transport interfaces 128 within a group can occur as the mobile device 10 moves within coverage area 108. For example, the coverage area 108 may include a plurality of wireless base stations, each having an associated sub-area of coverage area 108, each of the base stations or sub-groups of the base stations within a sub-area or group of sub-areas of area 108 being coupled to a respective one or a respective sub-set of the group of wireless transport interfaces 128. Alternatively, in some implementations, all of the wireless transport interfaces 128 within a group serving a coverage area 108 are able to receive messages that are directed towards them from substantially the entire coverage area 108.

Mobile devices 106 may be handheld or other mobile digital computing devices that are configured to send and receive email messages, and/or exchange voice and data over wireless network 104.

The present invention is not dependent on the particular protocol or methodologies used in gateway 100 to exchange messages between client network 110 and the wireless network 104. Rather, the present invention relates to assembly of data packets received at the gateway 100 from mobile devices 106 into messages.

When a mobile device 106 sends a message or "datagram", it breaks the datagram up into a sequence of associated data packets according to a predetermined protocol. A datagram can include just one data packet, or several data packets. The data packets for a single datagram from the mobile device are typically routed through a single wireless network adaptor 129 to its associated wireless transport interface 128, and reassembled at the wireless transport interface 128 for subsequent sending through a client network interface 120 to client network 110. However, in some situations, the data packets associated with a single datagram may end up being distributed among different wireless network adaptors 129 and different wireless transport interfaces 128 that are associated with the coverage area 108 that the sending mobile device 106 is located in. For example, distributed distribution of data packets among different wireless transport interfaces 128 could occur as the result of failure of a transport interface or wireless network adaptor, in which case a disaster prevention or recovery process orchestrated by the controller 122 could result in incoming data packets being switched from one wireless transport interface to another in the middle of a datagram. In another example, the shift of data packets from one wireless transport to another wireless transport 128 mid-datagram could be executed as part of a load balancing process orchestrated by controller 122. In another example, the shift of data packets from one wireless transport 128 to another mid-datagram could occur due to roaming as the mobile device moves within the coverage area 108.

Embodiments of the invention relate to the reassembly of datagrams or messages, particularly ones for which not all the data packets are received at the same wireless transport interface, but rather distributed among more than one wireless transport interface 128 serving a geographic coverage area or zone 108. In one implementation, the wireless transport interfaces 128 serving a geographic area 108 are configured to communicate over gateway network 118 to allow one wireless transport interface to take ownership for assembling data packets for a datagram that have been distributed among the group of wireless transport interfaces 128. In one implementation, the wireless transport interface 128 that receives the last data packet in a datagram takes ownership for reassembly and subsequent sending of the datagram to client network 110. A message or datagram assembler 138 is implemented on each wireless transport interface 128 for assembling data packets.

In order to facilitate communication among the wireless transport interfaces 128 that are associated with a geographic coverage area 108, in one implementation, database 124 includes a table 140 that identifies the "group" of wireless transport interfaces 128 associated with a particular geographic area 108 and which identifies a dedicated port or communications channel on gateway network 118 for communication purposes among the group of wireless transport interfaces 128. As will be explained in greater detail below, the group of wireless transport interfaces 128 associated with a geographical coverage area 108 use the assigned port to communicate ownership messages and exchange data packets as required.

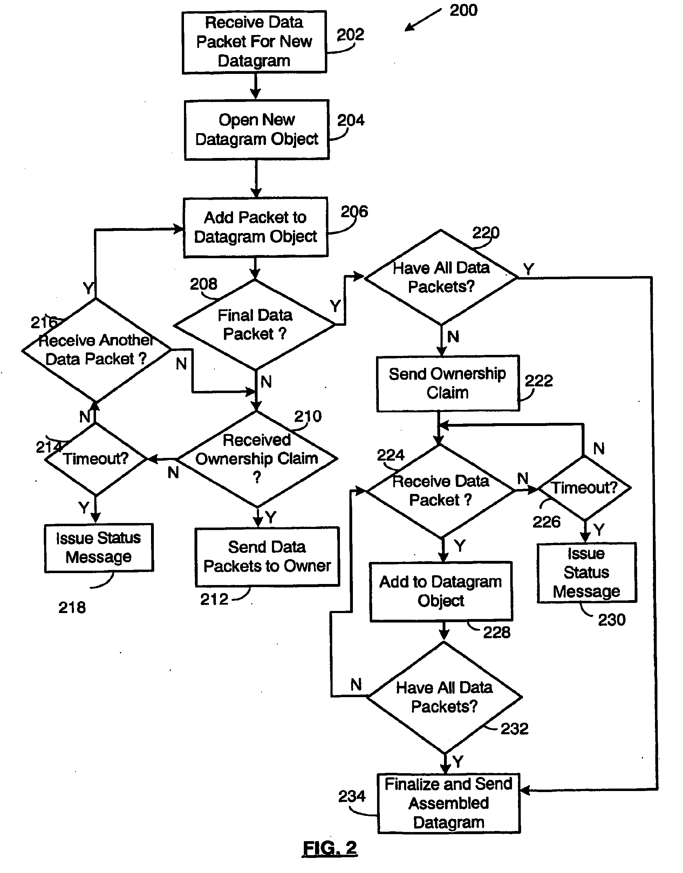

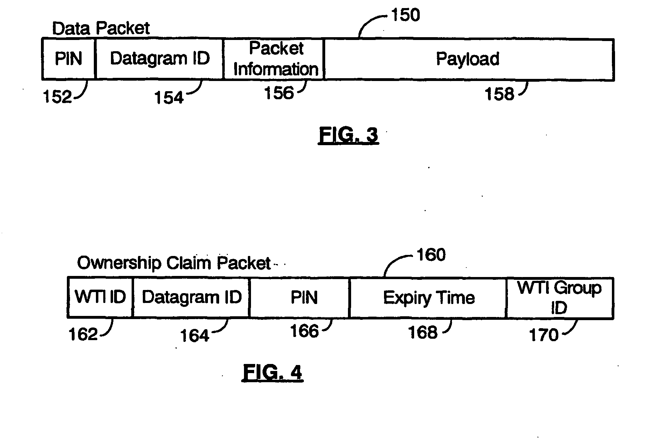

Figure 2 shows a datagram reassembly process, indicated generally by reference 200, implemented by a message or datagram assembler 138 implemented on each of the wireless transport interfaces 128 in the group associated with a coverage area 108. As represented in Figure 3, a data packet 150 will typically include a payload 158 and header information including a PIN 152 identifying the mobile device from which the data packet originated, a datagram ID 154 identifying the datagram with which the data packet 150 is associated, and packet information 156. Packet information 156 includes information identifying where in the sequence of data packets of the datagram the data packet 150 is located. As noted above, a datagram may be just one data packet in length (in which case packet information 156 will include information indicating that the data packet is the only data packet in the datagram), or may be broken up into a number of data packets.

Turning again to Figure 2, datagram reassembly process 200 begins, as indicated in step 202, when the subject wireless transport 128 receives from a mobile device 106 through a wireless network adaptor 129 its first data packet 150 of a datagram for which it has not previously received any other associated data packets. As indicated in step 204, the wireless transport interface 128 opens a new datagram object in its memory, and as indicated in step 206, adds the received data packet to the datagram object.

The wireless transport interface 128 then checks, as indicated in step 208, if the received data packet is the final data packet associated with the subject datagram. If it is the final packet then the wireless transport interface 128 assumes ownership of the entire datagram associated with the final data packet, and as indicated in step 220, checks the datagram object that it has been building to determine if it has all of the data packets of the datagram. As indicated in step 234, if the datagram object includes all packets of the datagram, the wireless transport interface 128 finalizes assembly of the datagram and then sends it on to its next destination (for example, a client network interface 120) in its journey to its ultimate destination.

Turning back again to step 220, if after receiving the final packet the wireless transport interface 128 determines that it does not have all the data packets associated with the datagram, it broadcasts an ownership claim for the datagram over gateway network 118 to all other wireless transport interfaces 128 that it shares the coverage area 108 with. As noted above, a port or communications channel on the gateway network 118 may be dedicated for such purposes. Figure 4 shows a block diagram representation of an ownership claim packet 160 broadcast by the wireless transport interface 128 over gateway network 118 in an example embodiment. The ownership claim packet 160 includes wireless transport interface ID 162 identifying the wireless transport interface 128 that is broadcasting the ownership claim; a datagram ID 164 identifying the datagram that the ownership claim is being made in respect of; a PIN 166 identifying the originating mobile device 106; and an Expiry Time 168 identifying a time after which the ownership claim can be ignored by the other wireless transport interfaces 128. In some implementations, especially where a dedicated communications channel between the wireless transport interfaces serving a coverage area is not used, the ownership claim packet 160 may include a WTI Group ID 170 that is associated with the group of wireless transport interfaces 170 serving a coverage area.

When the other wireless transport interfaces in the group serving the area receive the ownership claim, they each store it as an outstanding claim for the length set by the Expiry Time 168, and any data packets of the identified datagram that they have already received or which they receive prior to the end of the Expiry Time are sent over network 118 to the wireless transport interface 128 claiming ownership.

Turning again to process 200, after sending an ownership claim, the sending wireless transport interface 128 adds all of the data packets that it receives in reply to its ownership claim to the datagram object until all the data packets associated with the datagram have finally been received (steps 224, 228 and 232), after which it finalizes reassembly of the datagram and send the reassembled datagram onto its next destination (step 234). As indicated in steps 224, 226 and 230, the wireless transport interface that assumes ownership of a datagram having missing packets will, in at least one example embodiment, only keep waiting for the data packets for a predetermined duration, after which a suitable status message is issued (step 230) and process 200 ends for that particular datagram.

Turning again to step 208, in the event that a received data packet is not the final data packet in a datagram, the receiving wireless transport interface checks to see if the data packet is subject to any outstanding ownership claims that have been received from any of the other wireless transport interfaces. As suggested above, an ownership claim will be tracked as outstanding for the length of time specified by the Expiry Time defined in the ownership claim packet. If an outstanding ownership claim against the datagram associated with the received data packet is found, then, as indicated in step 212, all the data packets in the datagram object for the claimed datagram are sent over gateway network 118 to the wireless transport interface claiming ownership. The data packets are, in one embodiment, accompanied by a message from the transferring wireless transport interface that identifies the data packets that are being transferred.

In the event that there is no outstanding ownership claim against the datagram in step 210, the wireless transport interface then waits for a predetermined duration of time either to receive another data packet associated with the datagram, or for an ownership claim (steps 214, 216 and 210). If a further data packet of the datagram is received, steps 206 and onward are performed in respect of the newly received packet. If no additional data packets and no ownership request is received within the timeout period specified in step 214, then an appropriate status message is issued (step 218) and the process 200 ends in respect of the datagram.

Thus, in summary, once a wireless transport interface 128 receives a data packet for a datagram previously unknown to it, it will build a datagram object that includes the data packet and all subsequent data packets of the datagram received by the wireless transport. In the event that the wireless transport interface receives an ownership claim for the datagram from another wireless transport interface within a group associated with a predefined coverage area, it will transfer all of the data packets in the subject datagram object to the ownership claiming wireless transport interface. In the event that a data packet received by a wireless transport interface is the final data packet in a datagram, the receiving wireless transport will claim ownership of the datagram, and if missing any data packets of the datagram, it will send out an ownership claim to the other wireless transport interfaces of the group associated with the coverage area to solicit the missing data packets. Such a configuration is convenient when multiple wireless transport interfaces provide coverage to a geographic area for purposes of redundancy, scalability and load balancing. Such a configuration can also assist when roaming among a group of transport interfaces serving a defined coverage area occurs as a datagram distributed among more than one transport interface within the group can be rebuilt without requiring the mobile device to resend the entire datagram to a single transport interface. Thus, a wireless network can be broken up into coverage areas in which roaming is common, and each coverage area given an associated group of transport interfaces that can communicate among themselves to reassemble messages originating from within the coverage area.

Assigning the wireless transport interface that receives the last data packet as the owner of the datagram is convenient as it is relatively simple determination to make and the wireless transport interface receiving the last data packet will generally be the most likely wireless transport interface in the group to have the capacity to handle reassembly of the message. However, in some implementations, it is possible to use other criteria to assign ownership - for example the criteria for determining ownership could be the wireless transport interface receiving the penultimate data packet, or a threshold number of data packets, among other things.

It will be appreciated that the steps of process 200 could be performed in an order other than that specified above, and/or some steps altered or removed or additional steps added, with substantially the same end result. As suggested above, the coverage zone or area 108 served by a group of wireless transport interfaces could be a continuous or substantially continuous area, or could include a series of discrete areas which may be close together (for example, all within a given metro area), or which may be far apart (for example, areas on opposite sides of a country or continent).

In some implementations, step 202 of process 200 may include a sub-step of determining if the first data packet received by the wireless transport interface in respect of a new datagram is the only data packet in the datagram, and if so, then skip immediately to final step 234.

The above-described embodiments of the present invention are intended to be examples only. Alterations, modifications and variations may be effected to the particular embodiments by those skilled in the art without departing from the scope of the invention, which is defined by the claims appended hereto.

## Claims

1. A method for assembling a message from a sequence of data packets (150) in a communications system having a group of interface devices (128) for assembling messages transmitted as sequences of data packets (150) from within a coverage area (108) of a wireless communications network (104), the method comprising:
receiving at one interface device (128) of the group of interface devices (128) from the wireless communications network (104) at least one data packet (150) of a sequence of data packets that collectively form a message;
the method being **characterised in that** it further comprises:
determining if the interface device (150) should assemble the message based on a location of the at least one data packet (150) in the sequence of data packets, and if so sending out a request (160) to the other interface devices (128) of the group for any data packets (150) of the sequence received by the other interface devices (128) and receiving at the one interface device any data packets (150) sent by the other interface devices (128) in response to the request; and
assembling the data packets (150) of the sequence into the message at the one interface device (128).

2. The method of claim 1 comprising, prior to sending out the request (160), determining if the one interface device (128) has received all the data packets (150) of the sequence, wherein the request to the other interface devices (128) is sent out only if a determination is made that the one interface device (128) has not received all the data packets (150) of the sequence.

3. The method of either one of claims 1 or 2 wherein the location of the at least one data packet (150) in the sequence of data packets is the final data packet in the sequence.

4. The method of any one of the preceding claims wherein the group of interface devices (128) are distributed computers connected by a gateway network (118) across which the request (160) is sent.

5. The method of any one of the preceding claims wherein the request (160) comprises an interface device identifier (162) identifying the one interface device (128) and a sequence identifier (164) identifying the sequence.

6. The method of any one of the preceding claims wherein each data packet (150) of the sequence comprises information (154) associating the data packet (150) with the message and information (156) indicating a location of the data packet (150) within the sequence, wherein the criterion is based on a location of the at least one data packet (150) within the sequence.

7. The method of any one of the preceding claims comprising monitoring at the other interface devices (128) of the group for the request (160) and in reply thereto sending to the one interface device any data packets (150) for the sequence received at the other interface devices (128).

8. The method of any one of the preceding claims comprising monitoring at the one interface device (128) for a request from any of the other interface devices (128) of the group for data packets (150) of a requested sequence, and sending any data packets (150) of the requested sequence received by the one interface device (128) to a requesting one of the other interface devices (128) of the group.

9. The method of any one of the preceding claims wherein the coverage area (108) is a substantially continuous geographic area.

10. The method of any one of claims 1 to 8 wherein the coverage area (108) comprises a plurality of geographically dispersed areas.

11. The method of any one of the preceding claims, further comprising:
receiving at said other interface device (128) of the group of interface devices (128) data packets;
receiving at said other interface device (128) said request (160) from said one interface device (128) for any data packets (150) of the sequence of data packets; and
in response to said request (160), sending to said one interface device (128) any data packets (150) of said sequence of data packets received by said other interface device (128).

12. An interface device (128) comprising one of a group of interface devices (128) for receiving messages transmitted as sequences of data packets (150) from within a coverage area (108) of a wireless communications network (104), the group of interface devices (128) being coupled to a gateway network (118) for communicating there between, the interface device (128) comprising a message assembler (138) for assembling messages from received data packets, wherein the message assembler is **characterised in that** it comprises: means for determining if the interface device (128) should assemble a message from a sequence of data packets (150) of which the interface device has received at least one data packet (150); means responsive to said means for determining for sending out a request (160) for any missing data packets (150) to the other interface devices (128) in the group over the gateway network (118); and means for assembling the message upon receiving the missing data packets (150).

13. The interface device (128) of claim 12 wherein the gateway network (118) is configured to send each data packet (150) over the wireless communications network (104) to a single interface device (128).

14. The interface device (128) of either one of claims 12 or 13 wherein the means for determining of the message assembler (138) of the interface device (128) is configured to determine if the interface device (128) should assemble the message based on whether the interface device (128) has received a data packet (150) having a predetermined location in the sequence of data packets.

15. The interface device (128) of claim 14 wherein the predetermined location is a last location in the sequence of data packets (150).

16. The interface device (128) of any one of claims 12 to 15 wherein the message assembler (138) of the interface device (128) is configured to monitor for a request (160) for missing data packets (150) of a sequence from other interface devices (128) in the group and upon receipt thereof to send over the gateway network (118) to the requesting interface device (128) any missing data packets (150) of the sequence that have been received thereby.

17. The interface device (128) of claim 12 wherein the interface device (128) and the other interface devices have a respective dedicated communications channel on the gateway network (118) for communicating requests for missing packets.

18. The interface device (128) of any one of claims 12 to 17 wherein the gateway network (118) further comprises a wireless network adaptor (129) associated with the interface device (128) for converting data packets (150) received from the coverage area (108) from a first protocol to a second protocol suitable for the interface device (128).

19. The interface device (128) of any one of claims 12 to 18 wherein the coverage area (108) is a substantially continuous geographic area.

20. The interface device (128) of any one of claims 12 to 18 wherein the coverage area (108) comprises a plurality of geographically dispersed areas.

21. A communications system comprising a gateway network (118) and a group of interface devices (128) including the interface device (128) according to any one of claims 12 to 20.

## Patentansprüche

1. Verfahren zum Zusammenstellen einer Nachricht aus einer Abfolge von Datenpaketen (150) in einem Kommunikationssystem, das über eine Gruppe von Schnittstellengeräten (128) zum Zusammenstellen von Nachrichten verfügt, die als Abfolgen von Datenpaketen (150) aus einem Abdeckungsgebiet (108) eines Drahtloskommunikationsnetzes (104) heraus übertragen werden, das Verfahren umfassend:
das Empfangen an einem Schnittstellengerät (128) aus der Gruppe der Schnittstellengeräte (128) von mindestens einem Datenpaket (150) aus einer Abfolge von Datenpaketen, die zusammen eine Nachricht bilden, von dem Drahtloskommunikationsnetz (104);
das Verfahren ist **dadurch gekennzeichnet, dass** es des Weiteren umfasst:
das Ermitteln, ob das Schnittstellengerät (128) die Nachricht auf der Grundlage einer Position des mindestens einen Datenpakets (150) in der Abfolge von Datenpaketen zusammenstellen soll, und wenn das der Fall ist, das Aussenden einer Anforderung (160) an die anderen Schnittstellengeräte (128) aus der Gruppe nach irgendwelchen Datenpaketen (150) aus der Abfolge, die durch die anderen Schnittstellengeräte (128) empfangen wurden, und das Empfangen an dem einen Schnittstellengerät von allen Datenpaketen (150), die als Reaktion auf die Anforderung von den anderen Schnittstellengeräten (128) gesendet werden; und
das Zusammenstellen der Datenpakete (150) der Abfolge zu der Nachricht an dem einen Schnittstellengerät (128).

2. Verfahren gemäß Anspruch 1, umfassend, vor dem Aussenden der Anforderung (160), das Ermitteln, ob das eine Schnittstellengerät (128) bereits alle Datenpakete (150) der Abfolge empfangen hat, wobei die Anforderung an die anderen Schnittstellengeräte (128) nur ausgesendet wird, wenn ermittelt wurde, dass das eine Schnittstellengerät (128) noch nicht alle Datenpakete (150) der Abfolge empfangen hat.

3. Verfahren gemäß einem der Ansprüche 1 oder 2, wobei die Position des mindestens einen Datenpakets (150) in der Abfolge von Datenpaketen das abschließende Datenpaket in der Abfolge ist.

4. Verfahren gemäß einem der vorherigen Ansprüche, wobei die Gruppe von Schnittstellengeräten (128) verteilte Computer sind, die durch ein Gateway-Netz (118) verbunden sind, über das die Anforderung (160) gesendet wird.

5. Verfahren gemäß einem der vorherigen Ansprüche, wobei die Anforderung (160) eine Schnittstellengerätekennung (162) zur Identifizierung des einen Schnittstellengeräts (128) und eine Abfolgekennung (164) zur Identifizierung der Abfolge umfasst.

6. Verfahren gemäß einem der vorherigen Ansprüche, wobei jedes Datenpaket (150) der Abfolge Informationen (154) umfasst, welche das Datenpaket (150) mit der Nachricht assoziieren, und Informationen (156) umfasst, welche eine Position des Datenpakets (150) innerhalb der Abfolge angeben, wobei dieses Kriterium auf einer Position des mindestens einen Datenpakets (150) innerhalb der Abfolge basiert.

7. Verfahren gemäß einem der vorherigen Ansprüche, umfassend das Überwachen an den anderen Schnittstellengeräten (128) aus der Gruppe auf die Anforderung (160) und als Reaktion auf diese das Senden aller Datenpakete (150) für die Abfolge, die an den anderen Schnittstellengeräten (128) empfangen wurden, an das eine Schnittstellengerät.

8. Verfahren gemäß einem der vorherigen Ansprüche, umfassend das Überwachen an dem einen Schnittstellengerät (128) auf eine Anforderung von irgendeinem der anderen Schnittstellengeräte (128) aus der Gruppe für Datenpakete (150) aus einer angeforderten Abfolge und das Senden aller Datenpakete (150) aus der angeforderten Abfolge, die durch das andere Schnittstellengerät (128) empfangen wurden, an ein anforderndes der anderen Schnittstellengeräte (128) aus der Gruppe.

9. Verfahren gemäß einem der vorherigen Ansprüche, wobei das Abdeckungsgebiet (108) ein im Wesentlichen kontinuierliches geografisches Gebiet ist.

10. Verfahren gemäß einem der Ansprüche 1 bis 8, wobei das Abdeckungsgebiet (108) eine Vielzahl von geografisch verteilten Gebieten umfasst.

11. Verfahren entsprechend einem der vorherigen Ansprüche, des Weiteren umfassend:
das Empfangen von Datenpaketen an dem anderen Schnittstellengerät (128) aus der Gruppe der Schnittstellengeräte (128);
das Empfangen an dem anderen Schnittstellengerät (128) der Anforderung (160) von dem einen Schnittstellengerät (128) für irgendwelche Datenpakete (150) der Abfolge von Datenpaketen; und
als Reaktion auf die Anforderung (160) das Senden aller Datenpakete (150) aus der Abfolge von Datenpaketen, die durch das andere Schnittstellengerät (128) empfangen wurden, an das eine Schnittstellengerät (128).

12. Schnittstellengerät (128), das eines aus einer Gruppe von Schnittstellengeräten (128) bildet, zum Empfangen von Nachrichten, die als Abfolgen von Datenpaketen (150) aus einem Abdeckungsgebiet (108) eines Drahtloskommunikationsnetzes (104) heraus übertragen werden, wobei die Gruppe von Schnittstellengeräten (128) mit einem Gateway-Netz (118) verbunden ist, um miteinander kommunizieren zu können, das Schnittstellengerät (128) einen Nachrichten-Assembler (138) zum Zusammenstellen von Nachrichten aus empfangenen Datenpaketen umfasst, wobei der Nachrichten-Assembler **dadurch gekennzeichnet ist, dass** er umfasst: Mittel zum Ermitteln, ob das Schnittstellengerät (128) eine Nachricht aus einer Abfolge von Datenpaketen (150) zusammenstellen soll, von denen das Schnittstellengerät mindestens ein Datenpaket (150) empfangen hat; Mittel, die auf die Mittel zum Ermitteln reagieren, zum Aussenden einer Anforderung (160) für irgendwelche fehlenden Datenpakete (150) an die anderen Schnittstellengeräte (128) in der Gruppe über das Gateway-Netz (118); und Mittel zum Zusammenstellen der Nachricht beim Empfang der fehlenden Datenpakete (150).

13. Schnittstellengerät (128) gemäß Anspruch 12, wobei das Gateway-Netz (118) dafür konfiguriert ist, jedes Datenpaket (150) über das Drahtloskommunikationsnetz (104) an ein einziges Schnittstellengerät (128) zu senden.

14. Schnittstellengerät (128) gemäß einem der Ansprüche 12 oder 13, wobei die Mittel zum Ermitteln des Nachrichten-Assemblers (138) des Schnittstellengeräts (128) dafür konfiguriert ist zu ermitteln, ob das Schnittstellengerät (128) die Nachricht auf der Grundlage dessen zusammenstellen soll, ob das Schnittstellengerät (128) ein Datenpaket (150) empfangen hat, das eine vorgegebene Position in der Abfolge der Datenpakete hat.

15. Schnittstellengerät (128) gemäß Anspruch 14, wobei die vorgegebene Position eine letzte Position in der Abfolge von Datenpaketen (150) ist.

16. Schnittstellengerät (128) gemäß einem der Ansprüche 12 bis 15, wobei der Nachrichten-Assembler (138) des Schnittstellengeräts (128) konfiguriert ist zum Überwachen auf eine von anderen Schnittstellengeräten (128) in der Gruppe kommende Anforderung (160) für fehlende Datenpakete (150) einer Abfolge, und wenn eine solche empfangen wird, zum Senden aller fehlenden Datenpakete (150) der Abfolge, die durch dieses empfangen wurden, über das Gateway-Netz (118) an das anfordernde Schnittstellengerät (128).

17. Schnittstellengerät (128) gemäß Anspruch 12, wobei das Schnittstellengerät (128) und die anderen Schnittstellengeräte einen jeweiligen dedizierten Kommunikationskanal in dem Gateway-Netz (118) zum Kommunizieren von Anforderungen für fehlende Pakete haben.

18. Schnittstellengerät (128) gemäß einem der Ansprüche 12 bis 17, wobei das Gateway-Netz (118) des Weiteren einen mit dem Schnittstellengerät (128) assoziierten Drahtlosnetzadapter (129) umfasst, der dem Konvertieren von aus dem Abdeckungsgebiet (108) empfangenen Datenpaketen (150) von einem ersten Protokoll in ein zweites, für das Schnittstellengerät (128) geeignetes Protokoll dient.

19. Schnittstellengerät (128) gemäß einem der Ansprüche 12 bis 18, wobei das Abdeckungsgebiet (108) ein im Wesentlichen kontinuierliches geografisches Gebiet ist.

20. Schnittstellengerät (128) gemäß einem der Ansprüche 12 bis 18, wobei das Abdeckungsgebiet (108) eine Vielzahl von geografisch verteilten Gebieten umfasst.

21. Kommunikationssystem, umfassend ein Gateway-Netz (118) und eine Gruppe von Schnittstellengeräten (128), zu denen das Schnittstellengerät (128) gemäß einem der Ansprüche 12 bis 20 gehört.

## Revendications

1. Procédé pour assembler un message à partir d'une séquence de paquets de données (150) dans un système de communications présentant un groupe de dispositifs d'interface (128) pour assembler des messages transmis comme des séquences de paquets de données (150) depuis l'intérieur d'une zone de couverture (108) d'un réseau de communications sans fil (104), le procédé comprenant l'étape consistant à :
recevoir au niveau d'un seul dispositif d'interface (128) du groupe de dispositifs d'interface (128) du réseau de communications sans fil (104) au moins un paquet de données (150) d'une séquence de paquets de données qui forment un message collectivement ;
le procédé étant **caractérisé en ce qu'**il comprend en outre les étapes consistant à :
déterminer si le dispositif d'interface (128) devrait assembler le message en fonction d'un emplacement de l'au moins un paquet de données (150) dans la séquence de paquets de données, et si c'est le cas envoyer une demande (160) aux autres dispositifs d'interface (128) du groupe pour tous paquets de données (150) de la séquence reçus par les autres dispositifs d'interface (128) et recevoir au niveau du un seul dispositif d'interface tous paquets de données (150) envoyés par les autres dispositifs d'interface (128) en réponse à la demande ; et
assembler les paquets de données (150) de la séquence en le message au niveau du un seul dispositif d'interface (128).

2. Procédé selon la revendication 1, comprenant, avant l'étape consistant à envoyer la demande (160), l'étape consistant à déterminer si le un seul dispositif d'interface (128) a reçu tous les paquets de données (150) de la séquence, dans lequel la demande aux autres dispositifs d'interface (128) est envoyée uniquement si une détermination est faite que le un seul dispositif d'interface (128) n'a pas reçu tous les paquets de données (150) de la séquence.

3. Procédé selon l'une quelconque des revendications 1 ou 2, dans lequel l'emplacement de l'au moins un paquet de données (150) dans la séquence de paquets de données est le paquet de données final dans la séquence.

4. Procédé selon l'une quelconque des revendications précédentes, dans lequel le groupe de dispositifs d'interfaces (128) est formé d'ordinateurs distribués connectés par un réseau passerelle (118) sur lequel la demande (160) est envoyée.

5. Procédé selon l'une quelconque des revendications précédentes, dans lequel la demande (160) comprend un identifiant de dispositif d'interface (162) identifiant le un seul dispositif d'interface (128) et un identifiant de séquence (164) identifiant la séquence.

6. Procédé selon l'une quelconque des revendications précédentes, dans lequel chaque paquet de données (150) de la séquence comprend des informations (154) associant le paquet de données (150) au message et des informations (156) indiquant un emplacement du paquet de données (150) à l'intérieur de la séquence, dans lequel le critère est fondé sur un emplacement de l'au moins un paquet de données (150) à l'intérieur de la séquence.

7. Procédé selon l'une quelconque des revendications précédentes, comprenant les étapes consistant à surveiller au niveau des autres dispositifs d'interface (128) du groupe la demande (160) et en réponse à celle-ci envoyer à l'un seul dispositif d'interface tous paquets de données (150) pour la séquence reçus au niveau des autres dispositifs d'interface (128).

8. Procédé selon l'une quelconque des revendications précédentes, comprenant les étapes consistant à surveiller au niveau de l'un seul dispositif d'interface (128) une demande d'un quelconque parmi les autres dispositifs d'interface (128) du groupe pour des paquets de données (150) d'une séquence demandée, et envoyer tous paquets de données (150) de la séquence demandée reçus par l'un seul dispositif d'interface (128) à un dispositif demandeur parmi les autres dispositifs d'interface (128) du groupe.

9. Procédé selon l'une quelconque des revendications précédentes, dans lequel la zone de couverture (108) est une zone géographique essentiellement continue.

10. Procédé selon l'une quelconque des revendications 1 à 8, dans lequel la zone de couverture (108) comprend une pluralité de zones géographiquement dispersées.

11. Procédé selon l'une quelconque des revendications précédentes, comprenant en outre les étapes consistant à :
recevoir au niveau dudit autre dispositif d'interface (128) du groupe de dispositifs d'interface (128) des paquets de données ;
recevoir au niveau dudit autre dispositif d'interface (128) ladite demande (160) dudit un dispositif d'interface (128) pour tous paquets de données (150) de la séquence de paquets de données ; et
en réponse à ladite demande (160), envoyer audit un dispositif d'interface (128) tous paquets de données (150) de ladite séquence de paquets de données reçus par ledit autre dispositif d'interface (128).

12. Dispositif d'interface (128) comprenant un parmi un groupe de dispositifs d'interface (128) pour recevoir des messages transmis en tant que séquences de paquets de données (150) depuis l'intérieur d'une zone de couverture (108) d'un réseau de communications sans fil (104), le groupe de dispositifs d'interface (128) étant couplé à un réseau passerelle (118) pour communiquer entre eux, le dispositif d'interface (128) comprenant un assembleur de message (138) pour assembler des messages à partir de paquets de données reçus, dans lequel l'assembleur de message est **caractérisé en ce qu'**il comprend :
un moyen de détermination pour déterminer si le dispositif d'interface (128) devrait assembler un message à partir d'une séquence de paquets de données (150) de laquelle le dispositif d'interface a reçu au moins un paquet de données (150) ; un moyen sensible audit moyen de détermination pour envoyer une demande (160) pour tous paquets de données manquants (150) aux autres dispositifs d'interface (128) dans le groupe sur le réseau passerelle (118) ; et un moyen d'assemblage du message lors de la réception des paquets de donnés manquants (150).

13. Dispositif d'interface (128) selon la revendication 12, dans lequel le réseau passerelle (118) est configuré pour envoyer chaque paquet de données (150) sur le réseau de communications sans fil (104) à un dispositif d'interface unique (128).

14. Dispositif d'interface (128) selon l'une quelconque des revendications 12 ou 13, dans lequel le moyen de détermination de l'assembleur de message (138) du dispositif d'interface (128) est configuré pour déterminer si le dispositif d'interface (128) devrait assembler le message en fonction de la réception ou non d'un paquet de données (150) ayant un emplacement prédéterminé dans la séquence de paquets de données par le dispositif d'interface (128).

15. Dispositif d'interface (128) selon la revendication 14, dans lequel l'emplacement prédéterminé est un dernier emplacement dans la séquence de paquets de données (150).

16. Dispositif d'interface (128) selon l'une quelconque des revendications 12 à 15, dans lequel l'assembleur de message (138) du dispositif d'interface (128) est configuré pour surveiller une demande (160) pour des paquets de données manquants (150) d'une séquence d'autres dispositifs d'interface (128) dans le groupe et suite à la réception de celle-ci, pour envoyer sur le réseau passerelle (118) au dispositif d'interface demandeur (128) tous paquets de données manquants (150) de la séquence qui ont ainsi été reçus.

17. Dispositif d'interface (128) selon la revendication 12, dans lequel le dispositif d'interface (128) et les autres dispositifs d'interface ont un canal de communications dédié respectif sur le réseau passerelle (118) pour communiquer des demandes pour des paquets manquants.

18. Dispositif d'interface (128) selon l'une quelconque des revendications 12 à 17, dans lequel le réseau passerelle (118) comprend en outre un adaptateur de réseau sans fil (129) associé au dispositif d'interface (128) pour convertir des paquets de données (150) reçus de la zone de couverture (108) d'un premier protocole en un deuxième protocole approprié pour le dispositif d'interface (128).

19. Dispositif d'interface (128) selon l'une quelconque des revendications 12 à 18, dans lequel la zone de couverture (108) est une zone géographique essentiellement continue.

20. Dispositif d'interface (128) selon l'une quelconque des revendications 12 à 18, dans lequel la zone de couverture (108) comprend une pluralité de zones géographiquement dispersées.

21. Système de communications comprenant un réseau passerelle (118) et un groupe de dispositifs d'interface (128) comprenant le dispositif d'interface (128) selon l'une quelconque des revendications 12 à 20.
